# EUROPÄISCHE PATENTANMELDUNG

(11) **EP 2 636 304 A1**
(43) Veröffentlichungstag der Anmeldung: **11.09.2013**
(21) Anmeldenummer: 12001613.4
(22) Anmeldetag: 08.03.2012
(51) Int. Cl.: A01M 29/32, A01M 29/06

(54) **Abwehrvorrichtung zum Abwehren von Vögeln mit einer Halteeinrichtung**

(71) Anmelder: Jehle & König GbR, 85630 Neukeferloh (DE)
(72) Erfinder: Jehle, Bernd, 81927 München (DE); König, Thomas, 85630 Neukeferloh (DE)
(74) Vertreter: Rothkopf, Ferdinand

(57) **Zusammenfassung**

Bei einer Abwehrvorrichtung zum Abwehren von Vögeln von einem zu schützenden Gegenstand mit mindestens einem Stab, der mittels einer Halteeinrichtung an einem seiner Endbereiche gehalten ist, ist eine Kletteinrichtung zum lösbaren Anbringen der Haltereinrichtung am zu schützenden Gegenstand vorgesehen.

## Beschreibung

### Hintergrund der Erfindung

Die Erfindung betrifft eine Abwehrvorrichtung zum Abwehren von Vögeln von einem zu schützenden Gegenstand mit mindestens einem Stab, der mittels einer Halteeinrichtung an einem seiner Endbereiche gehalten ist.

Gegenstände, die vor Vögeln geschützt werden sollen, sind beispielsweise Schiffe und Boote sowie Gebäude und Gebäudeteile, wie Mauervorsprünge und Balkone, an einem Hafen, in Ortschaften oder Städten. Bekannterweise sitzen oder nisten dort gerne Vögel, wie Möwen oder Tauben, die die Gegenstände sowohl durch Futterreste als auch insbesondere durch ihre Exkremente verschmutzen. Diese Verschmutzungen sind optisch nicht schön und können zudem Überträger von Krankheitserregern sein. Darüber hinaus wirken die Exkremente der Vögel ätzend, wodurch die Gegenstände an ihrer Oberfläche oftmals irreparabel beschädigt werden.

Entsprechend müssen geeignete Vorrichtungen geschaffen werden, die die Vögel daran hindern, sich an den genannten Gegenständen niederzulassen. Derartige Vorrichtungen zum Abwehren von Vögeln sind bereits in verschiedenen Varianten entwickelt worden. Es wurden beispielsweise Propeller entwickelt, elektrische und akustische Signaleinrichtungen sowie Leinen, die über ein zu schützendes Boot gespannt werden und darüber hinaus auch Vorrichtungen mit Stäben, insbesondere Drähten. Derartige bekannte Vorrichtungen sind mit vergleichsweise großem Aufwand auf oder an dem zu schützenden Gegenstand anzubringen.

### Zugrundeliegende Aufgabe

Der Erfindung liegt die Aufgabe zugrunde, eine Abwehrvorrichtung zum Abwehren von Vögeln zu schaffen, die besonders einfach je nach Bedarf am zu schützenden Gegenstand angebracht und auch wieder gelöst werden kann, insbesondere, wenn der zu schützende Gegenstand zumindest leicht verformbar gestaltet ist.

### Erfindungsgemäße Lösung

Diese Aufgabe ist erfindungsgemäß mit einer Abwehrvorrichtung zum Abwehren von Vögeln von einem zu schützenden Gegenstand mit mindestens einem Stab, der mittels einer Halteeinrichtung an einem seiner Endbereiche gehalten ist, gelöst. Dabei ist eine Kletteinrichtung zum lösbaren Anbringen der Halteeinrichtung am zu schützenden Gegenstand vorgesehen.

Der zu schützende Gegenstand ist dabei insbesondere ein Boot oder ein Schiff, das an einer Boje oder im Hafen liegt und das gegebenenfalls mit einer Persenning abgedeckt ist.

Der mindestens eine Stab ist an einem seiner Endbereiche, dem so genannten ersten Endbereich, mittels einer Halteeinrichtung gehalten. Der mindestens eine Stab steht auf diese Weise also von der Halteeinrichtung ab. Bevorzugt stehen mehrere Stäbe von der Halteeinrichtung ab. Derart gehalten, ist der gegenüberliegende, zweite Endbereich des mindestens einen Stabes weit entfernt von der Halteeinrichtung positioniert. Die abstehenden Stäbe verhindern ein Niederlassen von Vögeln, da die Vögel von dem zweiten Endbereich der Stäbe vom zu schützenden Gegenstand auf Abstand gehalten werden und sich nicht auf den Gegenstand niederlassen können. Die Halteeinrichtung hat vorzugsweise die Form einer zumindest teilweise gefüllte Kugelkappe, insbesondere Halbkugel, an der der mindestens eine Stab bevorzugt zumindest annähernd radial nach außen gerichtet, angeordnet ist. Besonders bevorzugt sind derart mehrere Stäbe, insbesondere im Wesentlichen radial gerichtet und bevorzugt über die gewölbte Oberfläche der Kugelkappe hinweg verteilt, angeordnet. Derart angeordnet, ist die erfindungsgemäße Abwehrvorrichtung zumindest annähernd in einer Form ähnlich eines Igels gebildet. Vorteilhaft ist damit ein Abwehren von Vögeln in alle Richtungen, vom zu schützenden Gegenstand aus betrachtet, mittels nur einer Abwehrvorrichtung gewährleistet.

Besonders bevorzugt ist der mindestens eine Stab federnd beziehungsweise elastisch gestaltet. Der einzelne federnde Stab ist dabei ein Kunststoffstab und/oder ein Metalldraht, besonders bevorzugt ein Edelstahldraht. Mit dem federnden Gestalten des einzelnen Stabes wird zum einen ein Niederlassen von Vögeln erschwert, da der einzelne Stab nachgibt, falls sich ein einzelner Vogel darauf niederlassen will. Durch dieses Nachgeben erschrickt der einzelne Vogel und fliegt wieder weg. Darüber hinaus wird der mindestens eine federnde Stab mittels bewegender Einflüsse aus der Umgebung selbst bewegt und damit in Schwingungen versetzt. Diese Schwingungen erschweren das Anfliegen und Landen von Vögeln und schaffen einen zusätzlichen Vogelabwehreffekt. Bewegende Einflüsse aus der Umgebung sind beispielsweise Wind und zusätzlich Wasserströmung und/oder Wellenschlag, wenn ein Schiff oder Boot der zu schützende Gegenstand ist.

Erfindungsgemäß ist eine Kletteinrichtung zum lösbaren Anbringen der Haltereinrichtung und damit der Abwehrvorrichtung insgesamt am zu schützenden Gegenstand vorgesehen. Mittels der Kletteinrichtung ist eine Klettverbindung zwischen der Halteeinrichtung und dem zu schützenden Gegenstand ermöglicht. Die Klettverbindung wird gebildet durch ein Verzahnen von vielen kleinen, flexiblen, relativ steifen Haken, Schlaufen beziehungsweise Ösen nach dem sogenannten Haken-Ösen-Prinzip. Beim Ausüben von Druck verhaken sich die Haken zumindest teilweise in den Schlaufen und bilden so schnell eine stabile Verbindung. Die derart gebildeten Verhakungen können mittels Ziehen schnell wieder voneinander gelöst werden. Dazu ziehen beim Auseinanderziehen die Haken an den Schlaufen, schwenken und springen aus den Schlaufen heraus, womit die Klettverbindung gelöst ist. Danach nehmen die Haken wieder ihre ursprüngliche Form an und können mit den Schlaufen auch schnell wieder verbunden werden. Die Kletteinrichtung kann also wiederholt zum lösbaren Bilden einer kraftübertragenden Verbindung verwendet werden. Ein weiteres, alternatives Prinzip für eine derartige reversible Klettverbindung ist das Verankern von bevorzugt als Pilzköpfe gestalteten gleichartigen Noppen ineinander. Das Verankern kann mittels einer Schälbewegung wieder gelöst und mittels erneutem Aneinanderdrücken der Noppen auch leicht wieder hergestellt werden.

Mit einer derartigen Kletteinrichtung ist erfindungsgemäß eine Abwehrvorrichtung geschaffen, die vorteilhaft je nach Bedarf am zu schützenden Gegenstand besonders einfach angebracht und auch wieder gelöst werden kann. Das Anbringen und Lösen kann aufgrund der hohen Lebensdauer der Kletteinrichtung wiederholt durchgeführt werden. Besonders vorteilhaft ist dafür kein Werkzeug erforderlich.

Ferner ist die Kletteinrichtung selbst ein sehr kostengünstiger Bestandteil der erfindungsgemäßen Abwehrvorrichtung, da die dafür nötigen Komponenten im Markt allgemein kostengünstig erworben werden können.

Bevorzugt ist die Kletteinrichtung aus Metall, insbesondere aus Edelstahl und/oder besonders bevorzugt aus Kunststoff, insbesondere aus Kunststofffasern gebildet, die bevorzugt miteinander verwebt sind. In letzterem Fall hat die Oberfläche der Kletteinrichtung einen textilen Charakter, sodass beim Handhaben keine Verletzungsgefahr besteht.

Darüber hinaus ist eine Kletteinrichtung aus Kunststoff und/oder aus rostfreiem Edelstahl resistent gegenüber einer sonst auftretenden Rostbildung durch einen insbesondere am und im Meer erhöhten Salzgehalt in der Luft und damit verbundenen Salzablagerungen.

Ein weiterer großer Vorteil ist, dass die mit der Kletteinrichtung gebildete Klettverbindung beständig gegenüber Umwelteinflüssen, wie Wind, Temperaturschwankungen und Regen ist.

### Vorteilhafte Weiterbildungen der Erfindung

Bei einer vorteilhaften Weiterbildung der Erfindung umfasst die Kletteinrichtung zwei Klettelemente, von denen ein erstes Klettelement an der Halteeinrichtung ortsfest angeordnet und das zweite Klettelement zumindest leicht verformbar gestaltet ist, um am zu schützenden Gegenstand angebracht werden zu können.

Dabei ist das erste Klettelement bevorzugt ortsfest an der Halteeinrichtung bevorzugt mittels Ankleben, Annieten und/oder Anschrauben angeordnet, insbesondere befestigt. Bevorzugt bildet die Halteeinrichtung einen zumindest weitgehend starren beziehungsweise steifen Untergrund für das erste Klettelement, sodass dieses erste Klettelement mittels des ortsfesten Anordnens ebenfalls eine zumindest weitgehend steife Form aufweist.

Das zweite Klettelement ist bevorzugt aus flexiblem Edelstahlblech, besonders bevorzugt aus Kunststoff, insbesondere gewebten Kunststofffasern gebildet und damit zumindest leicht verformbar gestaltet. Derart gestaltet, kann das zweite Klettelement bevorzugt mittels Ankleben, Annieten, Anschrauben und gegebenenfalls Annähen am zu schützenden Gegenstand an dessen Form angepasst ebenfalls ortsfest angebracht werden.

Für den Fall, dass der zu schützende Gegenstand verformbar ist, passt sich das zumindest leicht verformbare zweite Klettelement an die sich ändernde Form des zu schützenden Gegenstands an. Ein derartiger zu schützender Gegenstand ist beispielsweise eine Schutzhülle für ein Boot, insbesondere eine Persenning, ein Sonnenschirm oder eine Markise. Mittels der Verformbarkeit des zweiten Klettelements passt sich dieses auch gut formschlüssig an das erste Klettelement an, das an der Halteeinrichtung angebracht ist. Derart angelagert, bildet sich bei einem Aneinanderdrücken des ersten und zweiten Klettelements eine besonders kraftschlüssige Klettverbindung, da sich weitgehend bevorzugt alle Haken und Ösen miteinander verhaken. Somit ist eine besonders stabile Klettverbindung zwischen der Halteeinrichtung und damit der Abwehrvorrichtung insgesamt und dem zu schützenden Gegenstand geschaffen. Dies ist insbesondere vorteilhaft für den Fall, dass der zu schützende Gegenstand sonst keinen festen, stabilen Untergrund für die Abwehreinrichtung bilden kann.

In einem weiteren Fall weist der zu schützende Gegenstand eine andere steife Form als die steife Form des ersten Klettelements auf, insbesondere eine unebene Form, mit beispielsweise Vertiefungen, insbesondere Wellen. Auch in diesem Falle passt sich das zweite Klettelement vorteilhaft mittels dessen zumindest leicht verformbaren Gestaltung optimal an den zu schützenden Gegenstand an. Derart angepasst, ist mittels dem beschriebenen ortsfesten Anbringen eine form- und kraftschlüssige Bindung zwischen dem zweitem Klettelement und dem zu schützendem Gegenstand geschaffen. Dann weist das zweite Klettelement eine andere steife Form auf, als das erste Klettelement, das sich an der Halteeinrichtung befindet. Dieser Formunterschied führt dazu, dass die Fläche, mit der sich das erste Klettelement und das zweite Klettelement beim Aneinanderdrücken berühren, kleiner ist. Trotzdem ist aufgrund der Eigenschaften einer Klettverbindung auch in diesem Falle eine stabile kraftschlüssige Verbindung zum Halten der Abwehrvorrichtung am zu schützenden Gegenstand geschaffen.

Vorteilhaft ist ferner gemäß der Erfindung an dem zweiten Klettelement ein Nahtbereich ausgebildet, mit dem das zweite Klettelement an dem zu schützenden Gegenstand anzunähen ist. Bevorzugt weist der zu schützende Gegenstand einen textilen Charakter und/oder ebenfalls zumindest einen Nahtbereich auf. Der zu schützende Gegenstand ist dabei in der Regel zumindest leicht verformbar gestaltet. Derart gestaltet, kann das zweite Klettelement an dem zu schützenden Gegenstand angenäht werden. Das Nähen schafft eine verformbare Nahtverbindung, die eine besonders haltbare Verbindung des zweiten Klettelements am zu schützenden Gegenstand bildet. Damit ist insgesamt eine verformbare Einheit geschaffen, insbesondere, wenn das zweite Klettelement und der zu schützende Gegenstand ebenfalls verformbar sind. Diese verformbare Einheit lagert sich besonders gut form- und kraftschlüssig an das erste Klettelement an, womit eine besonders stabile Klettverbindung geschaffen ist.

In einer vorteilhaften Weiterbildung der erfindungsgemäßen Abwehrvorrichtung ist eine Magneteinrichtung zum lösbaren Anbringen der Halteeinrichtung an einem zu schützenden Gegenstand vorgesehen. Mit der Magneteinrichtung kann die Halteeinrichtung mittels Magnetismus beziehungsweise Magnetkraft an dem zu schützenden Gegenstand wiederholt besonders einfach und schnell angebracht und auch wieder gelöst werden. Zudem ist dafür ebenfalls kein Werkzeug erforderlich.

Der Magnetismus beziehungsweise die Magnetkraft wirkt ferner bezüglich üblich auftretender Temperaturschwankungen in der Luft nahezu temperaturunabhängig, egal, ob kaltes, warmes oder heißes Wetter vorherrscht. Ferner wird die Magnetkraft vorteilhaft ebenfalls nicht durch Regen geschwächt, ebenso wenig wie durch einen insbesondere am Meer vorhandenen erhöhten Salzgehalt in der Luft und den damit verbundenen, nahezu allgegenwärtigen Salzablagerungen.

Ferner umfasst die Magneteinrichtung erfindungsgemäß vorzugsweise ein magnetisiertes Magnetelement und ein magnetisches Haftelement. Das magnetisierte Magnetelement ist bevorzugt ein ferromagnetischer Festkörper, der von Natur aus magnetisiert ist oder durch geeignete Behandlung magnetisiert wurde und dadurch einen Dauer- beziehungsweise Permanentmagneten darstellt. Derart magnetisiert, erzeugt das Magnetelement ein Magnetfeld, das zumindest auf die nähere Umgebung wirkt. In der näheren Umgebung befindet sich erfindungsgemäß das magnetische Haftelement. Magnetisch bedeutet, dass beim Anlegen eines äußeren Magnetfeldes, vorliegend durch das Magnetelement, zumindest einzelne magnetische Teilbereiche im Haftelement derart ausgerichtet werden, dass sie antiparallel zum Magnetfeld des Magnetelements gerichtet sind. Derart ausgerichtet, sind entgegengesetzt magnetische Pole entstanden, die sich anziehen und bewirken, dass das Haftelement vom Magnetelement angezogen wird. Damit ist vorteilhaft eine stabile, haltbare und wieder lösbare Verbindung zwischen Magnetelement und Haftelement gebildet.

Erfindungsgemäß ist das Magnetelement mittels der beschriebenen Magnetverbindung zum Koppeln an das Haftelement vorgesehen. Darüber hinaus ist das Magnetelement bevorzugt an der Halteeinrichtung angebracht, womit die Halteeinrichtung an das Haftelement koppelbar und auch wieder davon lösbar ist. Das Haftelement seinerseits ist bevorzugt am zu schützenden Gegenstand mittels der beschriebenen Kletteinrichtung angebracht. Damit ist die Halteeinrichtung vorteilhaft mittels der Magneteinrichtung auch an den zu schützenden Gegenstand koppelbar und ebenfalls wieder davon lösbar.

Vorzugsweise ist das Haftelement gemäß der Erfindung plattenförmig gestaltet. Plattenförmig bedeutet, dass das Haftelement mit einer verhältnismäßig großen Grundfläche und eine damit verglichen geringen Höhe bzw. Dicke gebildet ist. Die Grundfläche ist bevorzugt rechteckig oder rund gestaltet. Mit der Grundfläche bietet das Haftelement eine verhältnismäßig große Auflagefläche für das Magnetelement auf der einen Seite, das dadurch besonders stabil an das Haftelement koppelbar ist. Darüber hinaus ist auf der anderen Seite der Grundfläche eine verhältnismäßig große Auflagefläche zum Aufbringen des ersten Klettelements vorgesehen. Damit kann das erste Klettelement verhältnismäßig großflächig am Haftelement angebracht werden. Derart angebracht kann das erste Klettelement mit dem zweiten Klettelement, das bevorzugt der Größe des ersten Klettelements entspricht, eine besonders stabile und wieder lösbare Klettverbindung mittels einer besonders großen Auflagefläche eingehen.

Mit der plattenförmigen Gestalt des Haftelements ist dieses sehr dünn. Damit ist die Gesamtvorrichtung klein und braucht wenig Platz. Zugleich ist die Magneteinrichtung sehr nah am zu schützenden Gegenstand positioniert. Dies erhöht die Stabilität der Magnetverbindung. Mit einer großflächigen Platte als Haftelement und einer sich damit ergebenden großen Hebellänge wird auch eine mögliche Kippbewegung der Abwehrvorrichtung am zu schützenden Gegenstand reduziert.

Vorteilhaft ist das plattenförmige Haftelement mit einer eckigen Grundfläche gestaltet, bei der die Ecken und Kanten abgerundet sind. Besonders vorteilhaft ist das plattenförmige Haftelement mit einer zumindest annähernd kreisförmigen Grundfläche und abgerundeten Kanten gestaltet. Damit weist das Haftelement keine Ecken und Kanten auf, die einen Abrieb zwischen Haftelement und dem zu schützenden Gegenstand verursachen könnten, wenn der zu schützende Gegenstand verformbar, insbesondere mit einem textilen Charakter gestaltet ist, zum Beispiel eine Persenning ist.

Ferner ist das Haftelement vorzugsweise mit mindestens einem Griff gestaltet. An dem mindestens einen Griff, der auch als Henkel, Lasche oder Klinke bezeichnet werden könnte, kann das Haftelement manuell gegriffen und gehandhabt werden. Mit zwei Griffen ist es möglich das Haftelement mit zwei Händen zu greifen. Der einzelne Griff ist bevorzugt als Grifföffnung mittels einer Aussparung in dem Haftelement gebildet. Mit dem mindestens einen Griff kann ein Haftelement mit einem ersten Klettelement an seiner Unterseite stark auf das zweite Klettelement gedrückt werden, um eine stabile Klettverbindung zu schaffen.

Vorteilhaft ist ferner das Magnetelement der erfindungsgemäßen Abwehrvorrichtung scheibenförmig gestaltet. Das Magnetelement ist so an die Form des Haftelements angepasst. Damit liegt das Magnetelement auch mit einer großen Auflagefläche am Haftelement an. Folglich sind beide Bauteile stark magnetisch verbunden. Darüber hinaus ist der Schwerpunkt der Magneteinrichtung nahe am zu schützenden Gegenstand und so der Krafteinfluss gerade durch Kippkräfte am Gegenstand gering. Besonders bevorzugt ist dazu das Magnetelement als Scheibe in einer Aussparung der Halteeinrichtung positioniert.

Insgesamt ist der Schwerpunkt der Abwehrvorrichtung mit dieser Magneteinrichtung sehr nah am zu schützenden Gegenstand. Auf diese Weise werden Zugkräfte minimiert, die gegebenenfalls durch das schwingende Hin- und Herbewegen der federnden Stäbe über die Halteeinrichtung auf die beiden Klettelemente wirken, sodass vorteilhaft die Klettverbindung stabilisiert wird.

In einer vorteilhaften Weiterbildung ist eine Befestigungseinrichtung zum lösbaren Anbringen der Halteeinrichtung am zu schützenden Gegenstand vorgesehen, die ein erstes Befestigungselement und ein zweites Befestigungselement umfasst. Das erste Befestigungselement ist zum Koppeln der Halteeinrichtung an dem zweiten Befestigungselement und das zweite Befestigungselement ist zum Koppeln des ersten Befestigungselements an dem zu schützenden Gegenstand vorgesehen. Zudem ist ein Haltemittel vorgesehen, mit dem das erste Befestigungselement an der Halteeinrichtung und zugleich der mindestens eine Stab an der Halteeinrichtung gehalten sind.

Bevorzugt ist das erste Befestigungselement das Magnetelement und das zweite Befestigungselement das Haftelement, sodass das erste Befestigungselement die Halteeinrichtung mittels Magnetverbindung an dem zweiten Befestigungselement koppelt. Besonders bevorzugt ist das zweite Befestigungselement mit der Kletteinrichtung an dem zu schützenden Gegenstand angebracht und koppelt auf diese Weise das erste Befestigungselement und damit die Halteeinrichtung an den zu schützenden Gegenstand.

Das erfindungsgemäße Haltemittel hält einerseits das erste Befestigungselement an der Halteeinrichtung. Andererseits hält das Haltemittel an der Halteeinrichtung den mindestens einen Stab an einem seiner Endbereiche, insbesondere klemmt es den Stab dort. Mit dem derartigen Halten dieses Stabes ist dessen Bewegung in mindestens einem Bewegungsgrad beziehungsweise eine Bewegungsrichtung verhindert. Damit ist insbesondere zumindest ein Herausrutschen des Stabes aus der Halteeinrichtung vermieden. Aufgrund dieser zwei Funktionen des Haltemittels wird kein zusätzliches Befestigungsmittel zum Befestigen des mindestens einen Stabes gebraucht. Vorteilhaft werden damit Material- und Herstellungskosten gespart.

Das Haltemittel ist vorteilhaft aus einem scheibenförmigem Grundkörper und einer Schraube gebildet. Dabei ist die Schraube von unten, bevorzugt durch die Mitte des Grundkörpers hindurch in die Halteeinrichtung geschraubt. Der Grundkörper kann dabei zugleich das erste Befestigungselement bilden, welches den mindestens einen Stab befestigt, insbesondere klemmt. Insgesamt hält damit die Schraube das erste Befestigungselement als scheibenförmiger Grundkörper gegen die Halteeinrichtung. Vorzugsweise bildet das Haltemittel also zugleich einen Teil der Befestigungseinrichtung.

Der Endbereich des mindestens einen Stabes, der mittels der Halteeinrichtung gehalten ist, weist vorzugsweise eine abgewinkelte oder kopfförmige Verformung auf und befindet sich zwischen dem ersten Befestigungselement sowie der Halteeinrichtung. Dort hält das Haltemittel die Verformung des mindestens einen Stabes. Insbesondere wird dort die Verformung eingeklemmt. Damit ist eine besonders materialsparende und stabile Halterung des mindestens einen Stabes geschaffen.

Insgesamt ist mit der erfindungsgemäßen Lösung eine Abwehrvorrichtung zum Abwehren von Vögeln geschaffen, mit einer besonders kompakten Halteeinrichtung. Diese kann je nach Bedarf besonders schnell, einfach, wiederholt und ohne Werkzeug an einem zu schützenden Gegenstand stabil angebracht und auch wieder gelöst werden. Dabei ist die erfindungsgemäße Lösung bei einem zumindest leicht verformbaren zu schützenden Gegenstand besonders gut verwendbar.

### Kurzbeschreibung der Zeichnungen

Nachfolgend werden Ausführungsbeispiele der erfindungsgemäßen Lösung anhand der beigefügten schematischen Zeichnungen näher erläutert. Es zeigt:

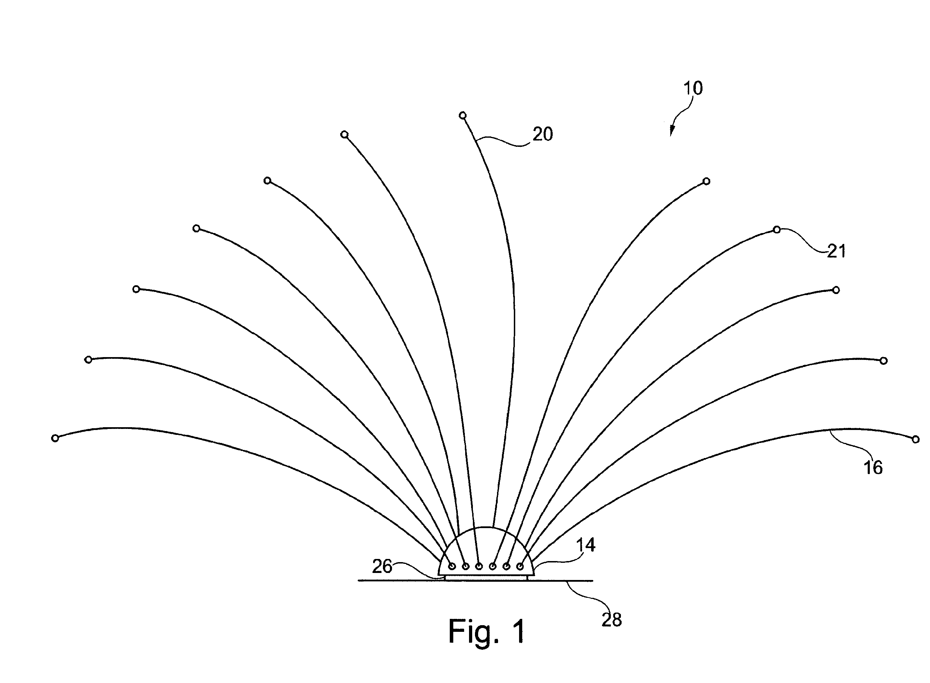

- Fig. 1: eine Seitenansicht einer erfindungsgemäßen Abwehrvorrichtung,
- Fig. 2: einen Längsschnitt einer ersten Variante der Abwehrvorrichtung gemäß Fig. 1,
- Fig. 3: das Detail III in Fig. 2 in vergrößerten Maßstab,
- Fig. 4: einen Längsschnitt einer zweiten Variante der Abwehrvorrichtung gemäß Fig. 1,
- Fig. 5: eine Draufsicht auf ein Haftelement einer Abwehrvorrichtung gemäß Fig. 4 und
- Fig. 6: eine Draufsicht auf ein zweites Klettelement einer Abwehrvorrichtung gemäß Fig. 4.

### Detaillierte Beschreibung der Ausführungsbeispiele

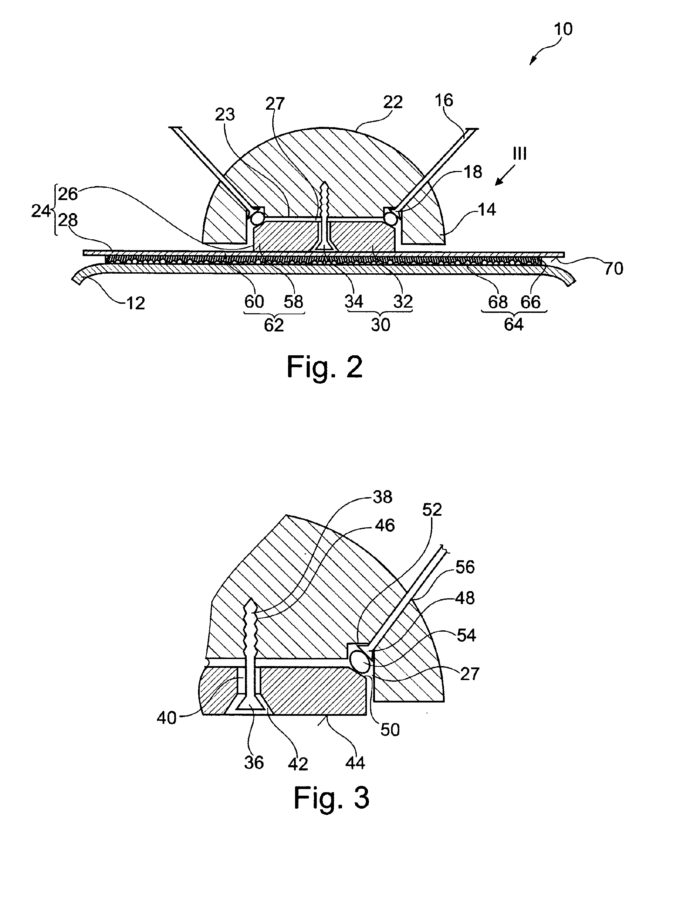

In den Fig. ist eine Abwehrvorrichtung 10 zum Abwehren von Vögeln von einem zu schützenden Gegenstand 12 dargestellt. Der zu schützende Gegenstand 12 ist z.B. ein Segelboot im Hafen oder etwa an einer Boje, das mit einer Persenning abgedeckt ist, von der in Fig. 2 ein Teil abgebildet ist.

Die Abwehrvorrichtung 10 umfasst eine massive, annähernd halbkugelförmige Halteeinrichtung 14, ähnlich einer gefüllten Kappe. Diese hält bzw. stützt zwischen ca. 10 und 20 federnde, im Querschnitt kreisrunde Stäbe 16 mit je einem Durchmesser von ca. 1,3 mm bis 1,5 mm an jeweils deren einem beziehungsweise ersten Endbereich 18. Dabei sind die Endbereiche 18 an der Halbkugelform entlang einer Kreislinie voneinander gleichmäßig beabstandet an der Halteeinrichtung 14 angeordnet. Derart positioniert, stehen die Stäbe 16 von der Halteeinrichtung 14 ab, vorliegend mit einer Reichweite bzw. Länge pro Stab 16 von etwa 0,75 bis 1,25 Meter. Damit ist von jedem Stab 16 dessen, dem ersten Endbereich 18 gegenüberliegender, zweiter Endbereich 20 relativ weit entfernt von der Halteeinrichtung 14 positioniert.

Der einzelne Stab 16 ist aus Edelstahldraht ausgebildet, der sich elastisch beziehungsweise federnd durch Krafteinfluss aus der Umgebung, beispielsweise durch Wellen- oder Windbewegungen selbst in Bewegung versetzen lässt. Die Stäbe 16 schwingen dann in der genannten Reichweite über und um die Halteeinrichtung 14 hinweg hin und her. Mit dieser Bewegung werden Vögel am Landen und Niederlassen in diesem Raum gehindert. Ferner werden die Vögel durch die sich bewegenden Stäbe 16 und die sich damit ergebenden Lichtveränderungen irritiert und von dem zu schützenden Gegenstand auch in einem weiteren Radius vertrieben. Diese schwingenden Stäbe 16 wehren also durch ihre Bewegungen vorteilhaft anfliegende Vögel, vorliegend insbesondere Möwen, vom zu schützenden Gegenstand 12 in alle Richtungen mittels nur einer Abwehrvorrichtung 10 ab.

Der zweite Endbereich 20 ist jeweils stumpf ausgebildet, vorliegend mit einem Ring 21 oder vorzugsweise auch einer Kugel versehen, um einer möglichen Verletzungsgefahr entgegen zu wirken.

Die Halteeinrichtung 14 weist eine Oberseite 22 auf und eine Unterseite 23, die in Richtung des zu schützenden Gegenstandes 12 liegt. An der Unterseite 23 befindet sich eine Befestigungseinrichtung 24, mit der die Halteeinrichtung 14 am zu schützenden Gegenstand 12 lösbar angebracht ist. Dabei umfasst die Befestigungseinrichtung 24 ein erstes Befestigungselement 26, das vorliegend platzsparend in einer Aussparung 27 auf der Unterseite 23 der Halteeinrichtung 14 positioniert ist. Ferner umfasst die Befestigungseinrichtung 24 ein zweites Befestigungselement 28, das an dem zu schützenden Gegenstand 12 angebracht ist. Derart angeordnet, koppelt das erste Befestigungselement 26 die Halteeinrichtung 14 an das zweite Befestigungselement 28 und das zweite Befestigungselement 28 koppelt das erste Befestigungselement 26 an dem zu schützenden Gegenstand 12.

Zudem ist an der Halteeinrichtung 14 ein Haltemittel 30 vorgesehen, das gleichzeitig die Stäbe 16 und das erste Befestigungselement 26 hält. Das erste Befestigungsmittel 26 ist mit einem scheibenförmigen Grundkörper 32 gestaltet, der zugleich einen Teil des Haltemittels 30 bildet. Das Haltemittel 30 umfasst außer dem Grundkörper 32 eine Schraube 34 mit einem Schraubenkopf 36 in Form eines Senkkopfes und einem Schraubenschaft 38. Der Grundkörper 32 ist als Scheibe kreisförmig und weist in der Mitte des Kreises einen Kanal 40 auf, der im Durchmesser geringfügig größer ist als der Durchmesser des Schraubenschafts 38 und kleiner als der Durchmesser des Schraubenkopfs 36. Derart gestaltet, ist die Schraube 34 mit ihrem Schraubenschaft 38 durch den Kanal 40 geschoben und mit ihrem Schraubenkopf 36 an dem Grundkörper 32 in einer dafür vorteilhaft vorgesehenen Aussparung 42 des Grundkörpers 32 gehalten. Die Aussparung 42 dient zum Versenken des Schraubenkopfs 36, damit eine nahezu ebene Fläche 44 erhalten wird, die als Kontaktfläche für das zweite Befestigungselement 28 vorgesehen ist.

In der Halteeinrichtung 14 ist ein Gewinde 46 für die Schraube 34 vorgesehen, das beim Einschrauben der Schraube 34 entsteht.

Insgesamt hält, insbesondere klemmt damit die Schraube 34 den Grundkörper 32 gegen die Halteeinrichtung 14. Gleichzeitig werden mit dem Grundkörper 32 und damit mit dem ersten Befestigungselement 28 die Stäbe 16 an deren jeweiligem ersten Endbereich 18 gehalten.

Dazu ist an dem jeweiligen ersten Endbereich 18 eine abgewinkelte oder kopfförmige Verformung 48 des Stabes 16 ausgebildet, die sich zwischen dem ersten Befestigungselement 26 sowie der Halteeinrichtung 14 befindet. Dort wird die Verformung 48 mittels des ersten Befestigungselements 28 und der Schraube 34 gegen die Halteeinrichtung 14 gedrängt und damit eingeklemmt.

Insgesamt werden auf diese Weise die Stäbe 16 vorteilhaft material- und platzsparend ohne weitere Befestigungsmittel jeweils an deren einem Endbereich 18 klemmend an der Halteeinrichtung 14 gehalten. Mit dem Halten ist die Bewegung der Stäbe 16 in mindestens einem Bewegungsgrad verhindert, sodass ein Herausrutschen des einzelnen Stabes 16 aus der Halteeinrichtung 14 vermieden ist.

Der Grundkörper 32 des Haltemittels 30 weist im Bereich der Verformungen 48 eine Abschrägung 50 auf. Darüber hinaus umfasst die Halteeinrichtung 14 zusätzlich eine Nut 52, die kreisförmig entlang des Umfangs der Aussparung 27 verläuft. In dieser einen einzigen Nut 52 sind alle Verformungen 48 der Stäbe 16 aufgenommen.

Darüber hinaus ist zwischen dem Grundkörper 32 und den jeweiligen Verformungen 48 der Stäbe 16 ein elastisches Element 54 in der Abschrägung 50 und der Nut 52 eingeklemmt, das als elastischer Ring beziehungsweise O-Ring gestaltet ist. Mit der Klemmung ist das elastische Element 54 federnd vorgespannt drängt so die einzelnen Stäbe 16 nach außen. Insgesamt werden damit Klappergeräusche vermieden.

Zum Anbringen des einzelnen Stabes 16 an der Halteeinrichtung 14 ist in dieser je ein Kanal 56 ausgeformt, der durch die Halteeinrichtung 14 gebohrt ist und mit einem Durchmesser von etwa 2 mm geringfügig größer ist, als der Durchmesser des einzelnen Stabes 16. Zugleich ist die Verformung 48 an dem ersten Endbereich 18 des Stabes 16 im Querschnitt größer, als der Durchmesser des Kanals 56. Beim Herstellen der Abwehrvorrichtung 10 wird der einzelne Stab 16 von der Unterseite 23 durch den Kanal 56 der Halteeinrichtung 14 geschoben, bis der Stab 16 mit dessen Verformung 48 an der Halteeinrichtung 14 anstößt und damit zurückgehalten ist.

Der mindestens eine Kanal 56 ist dabei schräg ansteigend in der Halteeinrichtung 14 von innen nach außen beziehungsweise von der Unterseite 23 bis zur Oberseite 23 ausgerichtet. Der jeweilige Stab 16, der durch den zugehörigen Kanal 56 der Halteeinrichtung 14 geschoben ist, weist entsprechend schräg nach oben von der Halteeinrichtung 14 weg. Damit ergibt sich für die im Kreis an den Kanälen 56 angeordneten Stäbe 16 eine kegelige, nach außen sich weitende Form.

Das erste Befestigungselement 26 wirkt nicht nur als Grundkörper 32 des Haltemittels 30, sondern auch als ein scheibenförmiges Magnetelement 58. Dieses Magnetelement 58 ist magnetisiert und dadurch ein Dauermagnet beziehungsweise ein Permanentmagnet, vorliegend aus Neodym-Eisen-Bor.

Unter dem Magnetelement 58 ist ein Haftelement 60 angeordnet. Dieses dient zum Koppeln des Magnetelements 58 als erstes Befestigungselement 26 an das zweite Befestigungselement 28. Das Haftelement 60 ist aus magnetischem beziehungsweise magnetisierbarem Edelstahl gebildet und hat dadurch magnetischen Charakter.

Das Haftelement 60 und das Magnetelement 58 bilden eine Magneteinrichtung 62. Dabei ist das Haftelement 60 am zu schützenden Gegenstand 12 angebracht und das Magnetelement 58 an der Halteeinrichtung 14 befestigt. Auf diese Weise ist die Halteeinrichtung 14 über die Magneteinrichtung 62 mit dem zu schützenden Gegenstand 12 verbunden. Bei dieser Verbindung wirkt die Magneteinrichtung 62 als Teil der Befestigungseinrichtung 24.

Die derartige magnetische Verbindung kann schnell zusammengekoppelt werden und bei Bedarf auch sehr schnell wieder lösbar. Sie ist zudem beständig gegen normale äußere Krafteinflüsse, wie Wellenschlag oder Winddruck, und unempfindlich gegen Umwelteinflüsse, wie Temperaturänderungen und Luftfeuchtigkeit.

Das Haftelement 60 ist seinerseits wiederum nicht direkt am zu schützenden Gegenstand 12 angebracht, sondern an eine Kletteinrichtung 64 gekoppelt. Diese Kletteinrichtung 64 ist dann mit dem zu schützenden Gegenstand 12 verbunden. Dazu umfasst die Kletteinrichtung 64 ein erstes Klettelement 66, das am Haftelement 60 und ein zweites Klettelement 68, das am zu schützenden Gegenstand 12 angebracht ist. Dabei ist das erste Klettelement 66 an dem Haftelement 60 an dessen Unterseite 70 angeklebt, die dem zu schützenden Gegenstand 12 zugewandt ist.

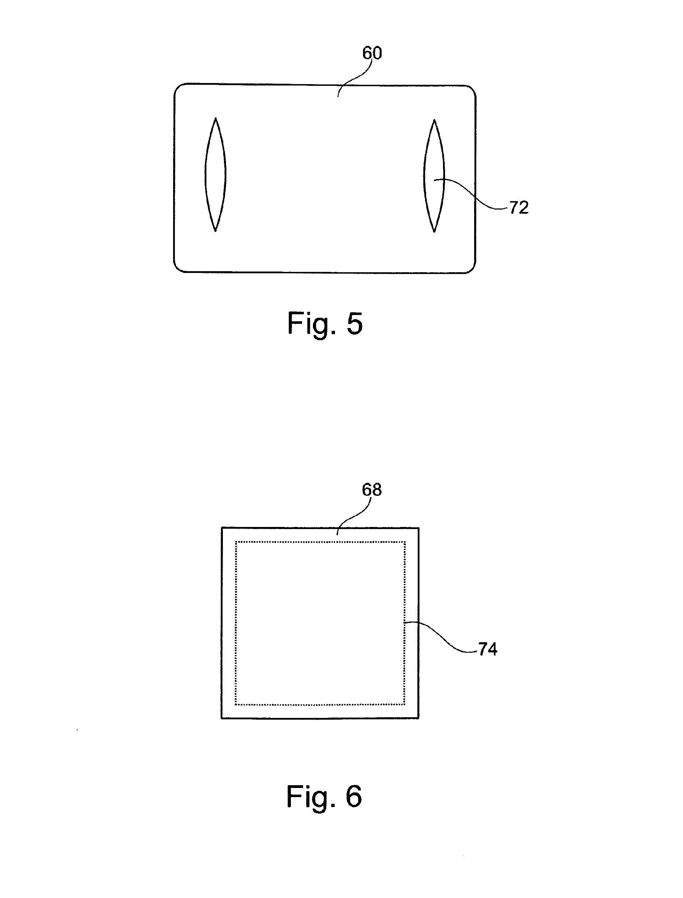

Das Haftelement 60 ist plattenförmig gestaltet, vorliegend als rostfreies Edelstahlmagnetblech mit einer Stärke von etwa 1,5 mm. Gemäß Fig. 5 ist das Haftelement 60 rechteckig mit abgerundeten Ecken und Kanten gestaltet, mit einer Länge von etwa 150 mm und einer Breite von etwa 260 mm bis 2600 mm.
Damit ist auf der einen Seite für das Magnetelement 58 eine große Auflagefläche geschaffen. Damit ist eine besonders stabile Magnetverbindung möglich. Bei einem nicht dargestellten Ausführungsbeispiel eines Haftelements 60 ist dieses als Kunststoffbrett gestaltet, in das ein ca. 100 mm mal 150 mm großes beidseitig pulverbeschichtetes Edelstahlmagnetblech eingesetzt ist. Das derart eingesetzte Edelstahlmagnetblech ist vorzugsweise mittels Schrauben an der Rückseite des Kunststoffbretts an diesem zurückgehalten, wobei die Schrauben dort bevorzugt versenkt und versiegelt sind.

Zugleich ist auf der anderen Seite eine große Auflagefläche zum Aufbringen eines dann besonders großen ersten Klettelements 66 geschaffen. So dass mit diesem eine besonders stabile Klettverbindung für das Haftelement 60 erzielt ist.

Am Haftelement 60 sind ein oder vorzugsweise auch zwei Öffnungen 72 ausgebildet, die als Griffe dienen. An den beiden Grifföffnungen 72 kann das Haftelement 60 genommen werden, um es mit seiner Unterseite 70 sowie dem daran angebrachten ersten Klettelement 66 auf das zweite Klettelement 68 zu drücken. Auch ein Lösen der Klettverbindung mittels Ziehen ist mit den Grifföffnungen 72 erleichtert.

Das zweite Klettelement 68 ist in den Ausführungsbeispielen gemäß Fig. 6 als textiles Kunstfasergewebe leicht verformbar mit einem Nahtbereich 74 gestaltet. Entlang dieses Nahtbereichs 74 ist das zweite Klettelement 68 an die Persenning, die als solche verformbar ist, ortsfest angenäht. Mit dem Nähen bleiben das Klettelement 68 und die Persenning weiterhin verformbar. So kann das zweite Klettelement 68 zusammen mit der Persenning weitgehend flächig an das erste Klettelement 66 angelegt werden, obwohl dieses an dem als Edelstahlblech gestalteten Haftelement 60 weitgehend starr positioniert ist.

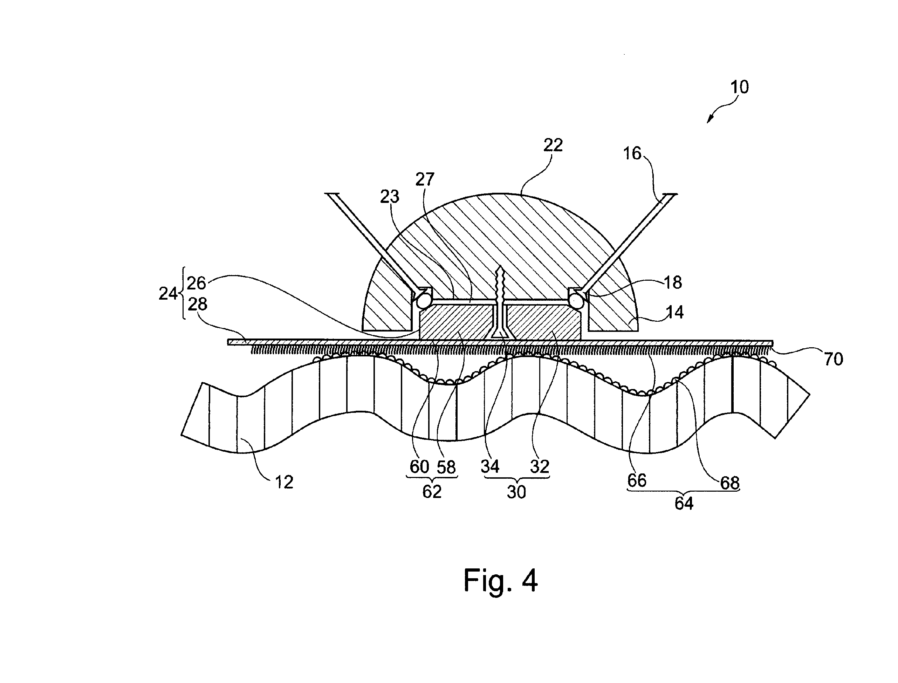

In der Variante, die in Fig. 4 dargestellt ist, weist der zu schützende Gegenstand 12, beispielsweise ein welliges Dach, eine steife, wellenförmige Oberfläche auf. Diese Oberfläche ist damit andere geformt, als die ebene Form des ersten Klettelements 66. Das verformbare zweite Klettelement 68 ist in dieser Variante auf der wellenförmigen Oberfläche des zu schützenden Gegenstands 12 vollflächig aufgeklebt. Damit liegt das zweite Klettelement 68 anders geformt vor, als das erste Klettelement 66. Beim Aneinanderdrücken der beiden Klettelemente 66 und 68 reicht deren Berührungsfläche dennoch zum Bilden einer stabilen Klettverbindung aus.

Vorliegend ist die Kletteinrichtung 64 gemäß dem sogenannten Haken-Ösen-Prinzip aus gewebten Kunststofffasern gebildet. Dabei ist das erste Klettelement 66 mit Haken gebildet und das zweite Klettelement 68 mit Ösen beziehungsweise Schlaufen als Flausch-Schlaufenelement. Alternativ sind die beiden Klettelemente bezüglich ihrer Ausstattung mit Haken oder Ösen vertauscht. Derart gebildet, hat die Kletteinrichtung 64 einen textilen Charakter und birgt damit keine Verletzungsgefahr beim Handhaben.

Beim Aneinanderdrücken der beiden Klettelemente 66 und 68 verhaken sich die Haken in den Ösen und eine stabile, lösbare sowie wiederherstellbare Klettverbindung ist hergestellt. Diese Klettverbindung ist beständig gegenüber auftretenden Umwelteinflüssen, wie Wind, Temperaturschwankungen, Wasser- und Salzgehalt der Luft.

Abschließend sei angemerkt, dass sämtlichen Merkmalen, die in den Anmeldungsunterlagen und insbesondere in den abhängigen Ansprüchen genannt sind, trotz dem vorgenommenen formalen Rückbezug auf einen oder mehrere bestimmte Ansprüche, auch einzeln oder in beliebiger Kombination eigenständiger Schutz zukommen soll.

### Bezugszeichenliste

- 10: Abwehrvorrichtung
- 12: zu schützender Gegenstand
- 14: Halteeinrichtung
- 16: Stab
- 18: erster Endbereich
- 20: zweiter Endbereich
- 21: Ring oder Kugel
- 22: Oberseite
- 23: Unterseite
- 24: Befestigungseinrichtung
- 26: erstes Befestigungselement
- 27: Aussparung
- 28: zweites Befestigungselement
- 30: Haltemittel
- 32: Grundkörper
- 34: Schraube
- 36: Schraubenkopf
- 38: Schraubenschaft
- 40: Kanal
- 42: Aussparung
- 44: Fläche
- 46: Gewinde
- 48: Verformung
- 50: Abschrägung
- 52: Nut
- 54: elastisches Element
- 56: Kanal
- 58: Magnetelement
- 60: Haftelement
- 62: Magneteinrichtung
- 64: Kletteinrichtung
- 66: erstes Klettelement
- 68: zweites Klettelement
- 70: Unterseite
- 72: Grifföffnung
- 74: Nahtbereich

## Patentansprüche

1. Abwehrvorrichtung (10) zum Abwehren von Vögeln von einem zu schützenden Gegenstand (12) mit mindestens einem Stab (16), der mittels einer Halteeinrichtung (14) an einem seiner Endbereiche (18) gehalten ist,
**dadurch gekennzeichnet, dass** eine Kletteinrichtung (64) zum lösbaren Anbringen der Halteeinrichtung (14) am zu schützenden Gegenstand (12) vorgesehen ist.

2. Abwehrvorrichtung nach Anspruch 1,
bei der die Kletteinrichtung (64) zwei Klettelemente (66, 68) umfasst,
von denen ein erstes Klettelement (66) an der Halteeinrichtung (14) ortsfest angeordnet und das zweite Klettelement (68) zumindest leicht verformbar gestaltet ist, um am zu schützenden Gegenstand (12) angebracht werden zu können.

3. Abwehrvorrichtung nach Anspruch 2,
**dadurch gekennzeichnet, dass** an dem zweiten Klettelement (68) ein Nahtbereich (74) ausgebildet ist, mit dem das zweite Klettelement (68) an dem zu schützenden Gegenstand (12) anzunähen ist.

4. Abwehrvorrichtung nach einem der Ansprüche 1 bis 3,
**dadurch gekennzeichnet, dass** eine Magneteinrichtung (62) zum lösbaren Anbringen der Halteeinrichtung (14) am zu schützenden Gegenstand (12) vorgesehen ist.

5. Abwehrvorrichtung nach Anspruch 4,
**dadurch gekennzeichnet, dass** die Magneteinrichtung (62) ein magnetisiertes Magnetelement (58) und ein magnetisches Haftelement (60) umfasst.

6. Abwehrvorrichtung nach Anspruch 5,
**dadurch gekennzeichnet, dass** das Haftelement (60) plattenförmig gestaltet ist.

7. Abwehrvorrichtung nach einem der Ansprüche 1 bis 6,
mit einer Befestigungseinrichtung (24) zum lösbaren Anbringen der Halteeinrichtung (14) am zu schützenden Gegenstand (12), die ein erstes Befestigungselement (26) und ein zweites Befestigungselement (28) umfasst, wobei das erste Befestigungselement (26) zum Koppeln der Halteeinrichtung (14) an dem zweiten Befestigungselement (28) und das zweite Befestigungselement (28) zum Koppeln des ersten Befestigungselements (26) an dem zu schützenden Gegenstand (12) vorgesehen ist, **dadurch gekennzeichnet, dass** ein Haltemittel (30) vorgesehen ist, mit dem das erste Befestigungselement (26) an der Halteeinrichtung (14) und zugleich der mindestens eine Stab (16) an der Halteeinrichtung (14) gehalten ist.

8. Abwehrvorrichtung nach Anspruch 7,
**dadurch gekennzeichnet, dass** das Haltemittel (30) aus einem scheibenförmigem Grundkörper (32) und einer Schraube (34) gebildet ist.

9. Abwehrvorrichtung nach Anspruch 7 oder 8,
**dadurch gekennzeichnet, dass** das Haltemittel (30) einen Teil der Befestigungseinrichtung (24) bildet.

10. Abwehrvorrichtung nach einem der Ansprüche 7 bis 9,
bei der der Endbereich (18) des mindestens einen Stabes (16), der mittels der Halteeinrichtung (14) gehalten ist, eine Verformung (48) aufweist und sich zwischen dem ersten Befestigungselement (26) sowie der Halteeinrichtung (14) befindet,
**dadurch gekennzeichnet, dass** das Haltemittel (30) die Verformung (48) des mindestens einen Stabes (16) zwischen dem ersten Befestigungselement (26) und der Halteeinrichtung (14) hält.
